(19) Europäisches Patentamt
European Patent Office
Office européen des brevets

(11) **EP 1 750 223 A2**

(12) **EUROPEAN PATENT APPLICATION**

(43) Date of publication:
**07.02.2007 Bulletin 2007/06**

(51) Int Cl.:
***G06Q 10/00*** *(2006.01)*

(21) Application number: **06118422.2**

(22) Date of filing: **03.08.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **05.08.2005 IT VR20050099**

(71) Applicant: **Ingegneria Dei Trasporti SrL
37126 Verona VR (IT)**

(72) Inventor: **De Beaumont, Michele
Verona 37126 (IT)**

(74) Representative: **Petraz, Gilberto Luigi et al
GLP S.r.l.
Piazzale Cavedalis 6/2
33100 Udine (IT)**

(54) **System for the rapid interchange of vehicles and/or goods between road/rail networks**

(57) A system for the rapid interchange of goods and/or vehicles between road/rail networks, especially for the interchange of goods and/or vehicles between road/motorway and rail networks, comprises at least one management centre (10) having a central computer designed to process requests received from a user and relating to a given type of goods and/or road vehicle intending to use the system, wherever located, whether travelling or stationary, and to associate such requests with a railway traffic management system containing information for locating trains in time and space on a certain section of the railway line; the system also comprises a set of Rapid Interchange Facilities (RIF) well distributed along said section of the railway line and where the goods and/or road vehicles can be rapidly loaded/unloaded individually onto/from a rail wagon.

Fig. 1

**Description**

**TECHNICAL FIELD**

This invention relates to a system for the rapid interchange of vehicles and/or goods between road/rail networks.

More specifically, the invention relates to a system for the rapid interchange of vehicles and/or goods between road/motorway and rail networks that can improve road conditions by alleviating the chronic congestion on road networks that currently constitutes a serious traffic problem.

The system according to the invention is intended as a "modal distribution" project and has for an object to shift a part of the traffic burden from one transport mode to other transport modes: specifically, from a road/motorway to a railway.

The invention is applicable, in general, to the road traffic sector and, in particular, to the sector of rapid interchange between road/rail networks, especially the en route interchange of road vehicles between a road or motorway and a railway.

**BACKGROUND ART**

It is a widely known fact that the chronic congestion on current road and motorway networks has reached critical levels and, in an attempt to shift part of the traffic burden to other modes of transport - namely, rail, ship and air transport - several "modal distribution" projects have been developed.

Attention has, for the most part, been given to the "heavy vehicle" component of the traffic burden. There are many reasons for this: it is generally believed that truck cargo is the most convenient to shift to other modes of transport in terms of speed and freight costs. Moreover, since accidents involving heavy vehicles are those that have the most serious consequences, it is desirable to shift this type of traffic away from roads and motorways as much as possible.

Promoting "intermodality", that is to say, interchange between different transport modes, is also one of the main aims of central and local government legislation to facilitate and support this interchange in order to alleviate congestion on road networks.

At present, "road-rail" interchange systems that may be defined as "rapid" are applied mainly to "heavy vehicles" (trucks, tractor-trailers, etc.) but are structured on predetermined routes and use specific technologies whose main limitation is that of not allowing the vehicles - even single vehicles - to be loaded and unloaded at intermediate stations.

Besides the services which cannot be compared with the subject-matter of this invention, such as, for example, the well-known mobility of containers (and the like) and the "motorail train" service whereby passengers can take their cars with them to destination on the same train as the one they are travelling on, there are two examples of prior art in this field which can certainly be compared with the system proposed by this invention.

The first is based on the technology known as "Modalohr" which uses wagons with lowered deck that can rotate by 45° to facilitate loading and unloading of heavy vehicles.

The second example is based on the technology known as "Hupac", where the vehicles are loaded onto the train wagons one after the other in a row and then unloaded in the same way at destination. This technology is used on some routes between Italy and Northern Europe and constitutes a sort of "rolling highway" that makes it possible for heavy road vehicles to travel across countries with particularly strict environmental protection regulations.

Neither of these systems is, however, free of disadvantages and limitations since they are both based on the concept of "Point-to-Point", that is to say, they provide a rail link between a single origin and a single destination.

More specifically, vehicles can be loaded on the train only at the terminal where the train starts and unloaded at the destination terminal, without any possibility of boarding or disembarking at any station between the two terminals. This lack of flexibility makes it impossible to meet potential market demand at intermediate points along the rail route.

Thus, for example, if a new interchange facility were constructed on one of the existing rail routes, this would no doubt be unfit for use by the Hupac system and would offer little attraction for the Modalohr system, for the following reasons.

In the case of the Hupac system, complex manoeuvres would be necessary to fasten and unfasten the wagons and these manoeuvres would require relatively long stretches of railway line. Additional locomotives would also be necessary.

In the case of the Modalohr system, the result would more than likely be delays and reduced efficiency in loading and unloading on account of the "point-to-point" approach the system is based on.

It should also be noted that the Modalohr system can handle only tractor-trailers, that is to say, vehicles where the trailer can be detached from the tractor. The two parts cannot be loaded together and, instead, must travel separately.

Further, these two systems are not currently accessible to cars and the "interchange nodes" occupy vast areas. Thus, in the case of Hupac, loading takes place in line, which means that large areas are required as parking space for waiting vehicles, while, in the case of Modalohr, with loading at 45°, more space is required than for a side loading system.

The drawbacks of current systems can be summed up as follows:

a) low flexibility: the systems are not designed to be expanded in modular fashion to be more densely distributed in the geographical area served;
b) limited accessibility: the interchange areas are often removed from major transport links and access to them means using frequently congested roads;
c) slowness: loading and unloading operations, especially in the case of Hupac, are lengthy;
d) limited capacity: not all types of vehicles can be loaded and, moreover, neither of the systems was designed to operate on a regular schedule or timetabled basis;
e) limited usability: users wishing to access one of these systems must make commercial agreements with the providers of the railway service beforehand in order to define times, access methods and payments; in practice, a driver wishing to change mode of transport en route cannot simply decide to board a train at the nearest access point.

## DESCRIPTION OF THE INVENTION

This invention proposes a rapid road-rail interchange system that allows vehicles travelling on road/motorway networks to change mode of transport quickly and easily and that can overcome or at least reduce the above mentioned drawbacks.

More specifically, the invention proposes an interchange system that is simple to implement and that can significantly alleviate the burden of heavy vehicle traffic on roads and motorways.

This will have important effects not only in terms of road traffic but also in terms of energy saving, environmental emissions and road safety.

There can be no doubt that energy and the environment are priority issues, today, and certainly no less important than the problem of congested traffic. The system according to the invention can significantly reduce the emission of pollutants, in particular CO, into the atmosphere.

This is achieved by a system, as described in the main claim, for the rapid interchange of vehicles between road and rail networks.

The dependent claims describe advantageous embodiments of the invention.

The advantages of the invention, besides all those regarding the potential reduction of CO emissions, regard a similar reduction in fuel consumption for the vehicles that remain on the road.

Further, a lighter burden of heavy vehicles on roads speeds up road traffic in general, reducing queues and accident risks, with obvious benefits in terms of vehicle mobility as a whole.

The above mentioned aims and advantages are all achieved, according to the invention, by a system for the rapid interchange between road vehicles and railway wagons based essentially on the following main factors:

1. A set of densely distributed "Rapid Interchange Facilities" (RIF) offering a high level of accessibility.
2. A railway service operating on a regular time interval (frequency) and/or timetabled basis.
3. A technology capable of speeding up loading and unloading from the side.
4. A management and monitoring system.

The system according to the invention may be defined as "rapid" for a number of reasons, including the fact that it is densely distributed, highly accessible and based on an efficient management system for the control and monitoring of reservations and access.

The system according to the invention uses a rapid side loading system and, unlike traditional systems, uses a train that allows vehicles to get on or off the wagons at any stop in much the same way as passengers get on or off a train or urban rail car.

## DESCRIPTION OF THE DRAWINGS

Other features and advantages of the invention will become more apparent from the following description of an embodiment of the invention, given as a non-restricting example, with the help of the accompanying drawings, in which:

- Figure 1 schematically illustrates the management and monitoring system according to the invention;
- Figure 2 schematically represents the actions performed by the management system following a reservation request;
- Figure 3 schematically represents the management and monitoring system which can identify and calculate the positions in time and space both of the user and of the trains that can potentially meet the request;
- Figure 4 is a block diagram representing the loading system adopted at the rapid interchange facilities or "RIF", where the system assigns to the first vehicle to arrive the first free loading bay in the train's travel direction;

- Figure 5 is a schematic plan view showing a handling method for loading and unloading vehicles onto and from the train;
- Figure 6 schematically represents the steps for accessing the rapid interchange facilities;
- Figure 7 schematically illustrates the vehicle loading / unloading technology using side loading/unloading platforms operating in conjunction with low-deck railway wagons equipped with side loading/unloading rollers;
- Figure 8 schematically illustrates an example of a transport route through the central Po plain in northern Italy;
- Figure 9 shows an estimate of potential demand compared with motorway vehicle traffic data.

**DESCRIPTION OF A PREFERRED EMBODIMENT OF THE INVENTION.**

With reference to the accompanying drawings, the numeral 10 denotes the system management centre comprising a central computer designed to process requests received from any road vehicle, wherever located, whether travelling or stationary, and to meet all requirements enabling the vehicle to access the system.

In fact, the system according to this invention is based on the rapid interchange, including that of information, between road and rail networks, in other terms, on the following factors:

a) A set of densely distributed "Rapid Interchange Facilities" (RIF) offering a high level of accessibility.
b) A railway service operating on a regular time interval (frequency) and/or timetabled basis.
c) A technology capable of speeding up loading and unloading from the side.
d) A management and monitoring system.

The interchange of information between road and rail networks can be defined as "rapid" for the following reasons:

- it is widespread;
- it is highly accessible;
- it is based on an efficient management system for the control and monitoring of reservations and access;
- it uses a rapid side loading technology.

System operation can be divided broadly into the following steps:

**a)** Reservation of travel tickets from any of the possible access points (telephone, internet, dedicated equipment located at service stations, ports, motorway toll stations and so on).
**b)** Checking of availability and confirmation of reservation.
**c)** Arrival of the vehicle at the RIF at the agreed time.
**d)** Performance of checks during access to the RIF.
**e)** Rapid loading of the vehicle, as is, at the agreed node and time on board the train indicated.
**f)** Use of services available during the train journey: (restaurant, sleeping car, etc.).
**g)** Rapid unloading at destination.

This system may be used to transport any type of vehicle - be it a car, truck, tractor-trailer or other type of vehicle - and the driver, for safety, travels on a dedicated rail car offering a full set of passenger facilities and services.

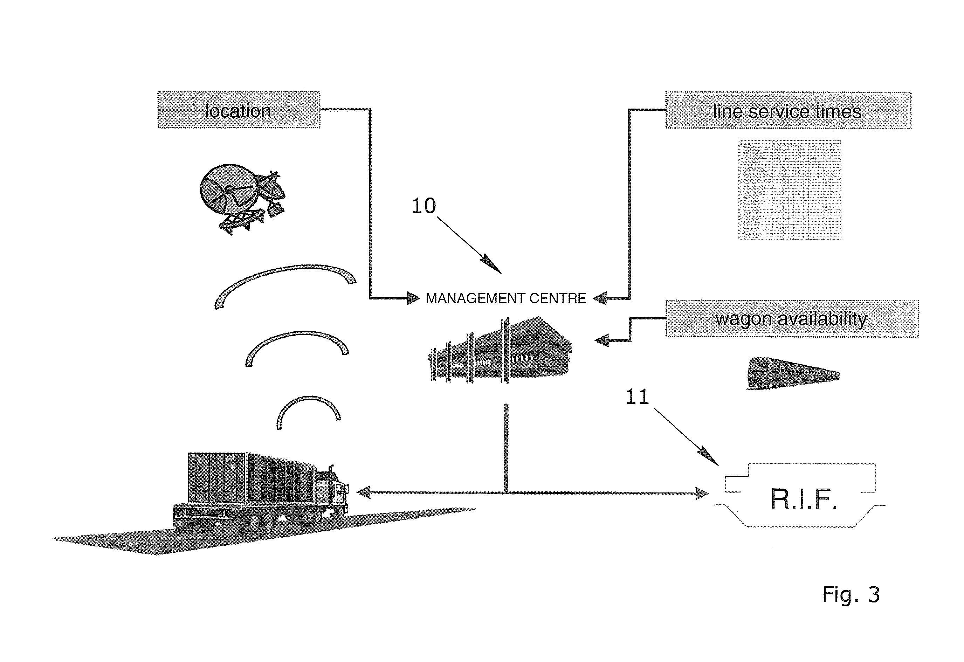

The system according to the invention uses a set of rapid interchange facilities, also referred to as RIF for short, labelled 11 in Figure 3, and consisting of areas where the interchange between the road (or motorway) and the railway occurs.

The rapid interchange facilities must be densely distributed in the geographical area served and must be highly accessible.

For the purposes of the invention, being densely distributed in the geographical area served means the facilities must not be more than 70-100 km from each other along a railway line, whilst high accessibility must be guaranteed by dedicated roads or rail links bringing the two modes of transport physically closer together. For example, consider the interchange between a motorway and a railway.

A first important condition is the proximity to a motorway exit at a point of access to the railway network.

Rapid interchange facilities must be able to "fuse" the two modes of transport and must not interrupt the continuity of a journey.

Thus, the motorway exit might have a branch leading directly to a rapid interchange facility before reaching the motorway toll station so that payment of the toll (for example, automatically through the "Telepass" system) would take place only after the vehicle is unloaded at destination, or after the driver has decided to leave the motorway-railway system.

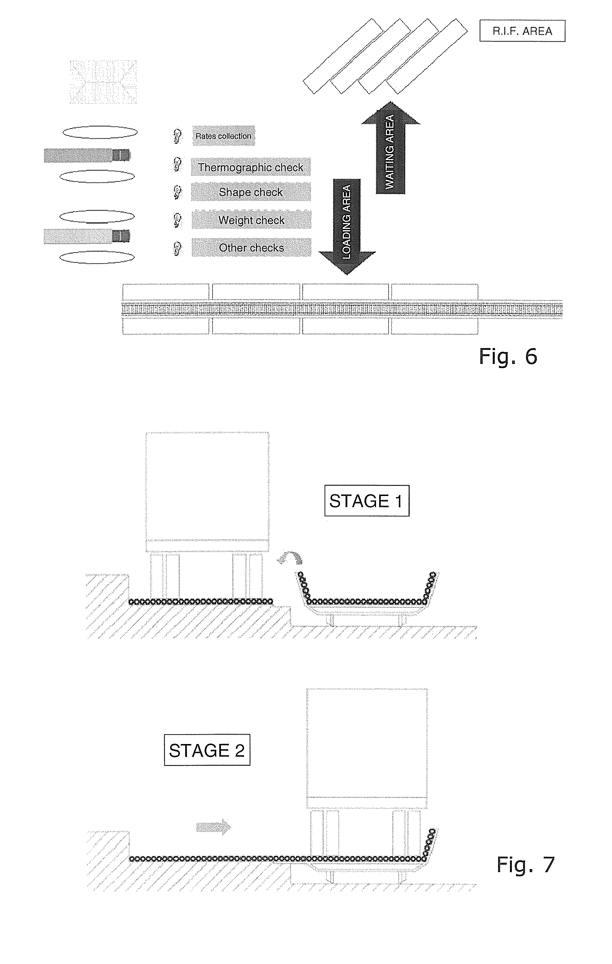

The rapid interchange facility has an access gate where routine checks are carried out on the vehicle and on travel documents. As shown in Figure 6, the checks include:

- identification and access
- vehicle dimensions and clearances
- thermogram
- weight
- reservation and ticket.

Current technologies allow all of these checks to be carried out automatically.

Thus, vehicle dimensions and clearances can be checked by a laser or image recognition system, whilst the weight can be checked using a piezoelectric system or other system embedded in the road.

Reservations and tickets can be processed automatically by any of a number of different systems: Telepass, proximity cards, credit cards and number plate recognition systems are just some examples of those that might be used.

After crossing the gate and passing the check points, the vehicle is directed towards the loading bay by means of variable message panels.

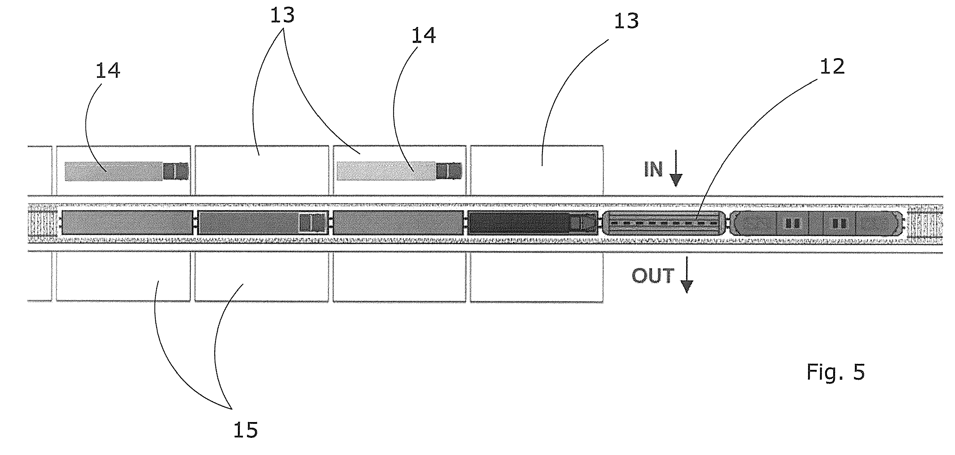

As shown in Figure 5, once the train 12 is in position, the loading bay, which is parallel to the railway line, lifts and operates the side loading platform 13 in such a way as to load the vehicle 14 onto the rail wagon.

While vehicles are being loaded, other vehicles, whose destination is at that rapid interchange facility, are unloaded from the train 12 by unloading platforms 15.

When loading and unloading operations have been completed, the train is ready to leave. Vehicle departure waiting times are estimated to be less than 15 minutes.

The rapid interchange system according to this invention is based on a special railway system which uses existing or technologically adapted railway networks with trains that may run:

- on a regular time interval (frequency) basis: one train every x minutes
- on a timetabled basis

The aim of the rapid interchange system is to use mainly rail networks with a high railway capacity, where the theoretical daily throughput of trains is still high but has not yet reached the saturation point.

It is obvious, that improvements in technology can reduce the intervals between trains, thus increasing the capacity of existing railway lines. At present, there are some limitations on maximum capacity in terms of weight.

For the perfect running of the system, the vehicle loading/unloading technology is of fundamental importance.

The vehicle loading/unloading technology uses low-deck railway wagons loaded from the side and bays equipped with side loading/unloading platforms.

The purpose is to speed up operations at the rapid interchange facility. Current handling technologies, which are undergoing rapid development, might also be specifically developed based on a system of rollers located at ground level, parallel to the railway line, and on the rail wagon deck.

As schematically shown in Figure 5, the vehicle to be loaded enters the loading bay where the platform, once the train has been suitably positioned, starts moving the rollers in such a way as to shift the vehicle sideways onto the rail wagon deck.

Figure 7, on the other hand, schematically illustrates the two stages of the vehicle loading/unloading technology which uses low-deck railway wagons, equipped with side loading/unloading rollers, and bays with side loading/unloading platforms.

The purpose is to speed up operations at the RIF. Current handling technologies, which are undergoing rapid development, might also be specifically developed based on a system of rollers located at ground level, parallel to the railway line, and on the rail wagon deck.

During stage 1, the vehicle to be loaded enters the loading bay where the platform, once the train has been suitably positioned, starts moving the rollers in such a way as to shift the vehicle sideways until, during stage 2, it is fully loaded onto the rail wagon deck. The continuity between the platform and the wagon deck is guaranteed by an appropriate bridge that moves automatically into position and is equipped with self-propelling rollers. The procedure is reversed to unload the vehicle.

As mentioned above, the management and monitoring system consists of the management centre 10 which can process requests received from any road vehicle, wherever located, whether travelling or stationary.

It also processes all the requirements enabling the vehicle to access the system.

The availability request may be made through any of a number of well-known technologies such as, for example, telephone (fixed or mobile), Internet, latest generation satellite navigators, Telepass or other dedicated equipment, wherever located..

The reservation request may be made by the driver or any other person authorised to arrange the vehicle's journeys.

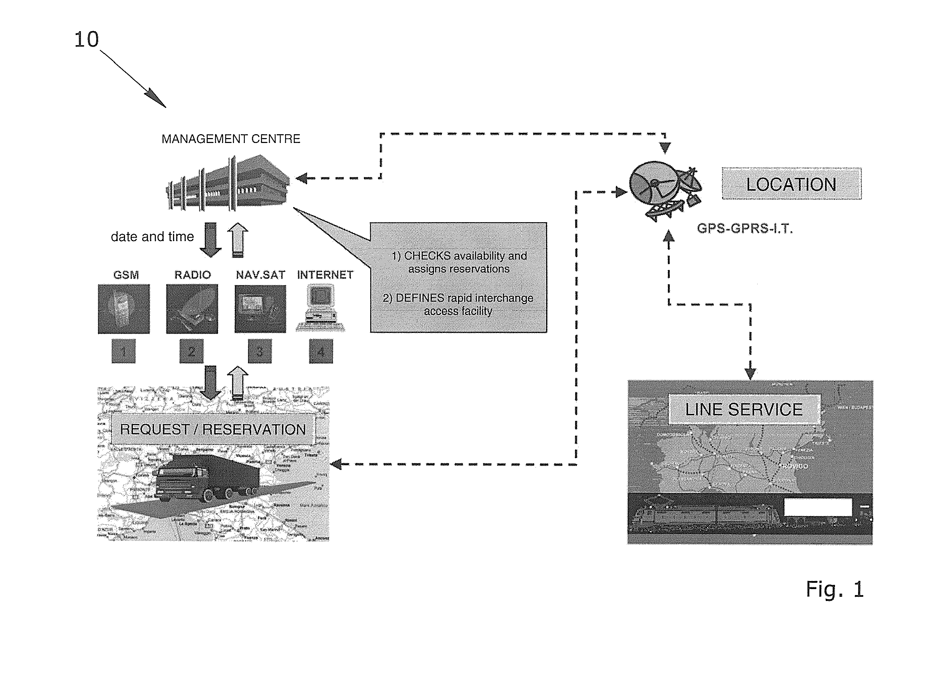

Figure 1 schematically illustrates how the management and monitoring system works. The management centre 10 communicates directly with GPS location systems which are in turn linked to line services. It also communicates directly with the systems that process the availability requests received from vehicles.

The management system makes a record of the request, that is to say, it:

- Checks the acceptability of the request
- Checks train times and availability
- Identifies and proposes one or more potential RIF providing access to the service
- Interacts with the customer
- Confirms the request/reservation

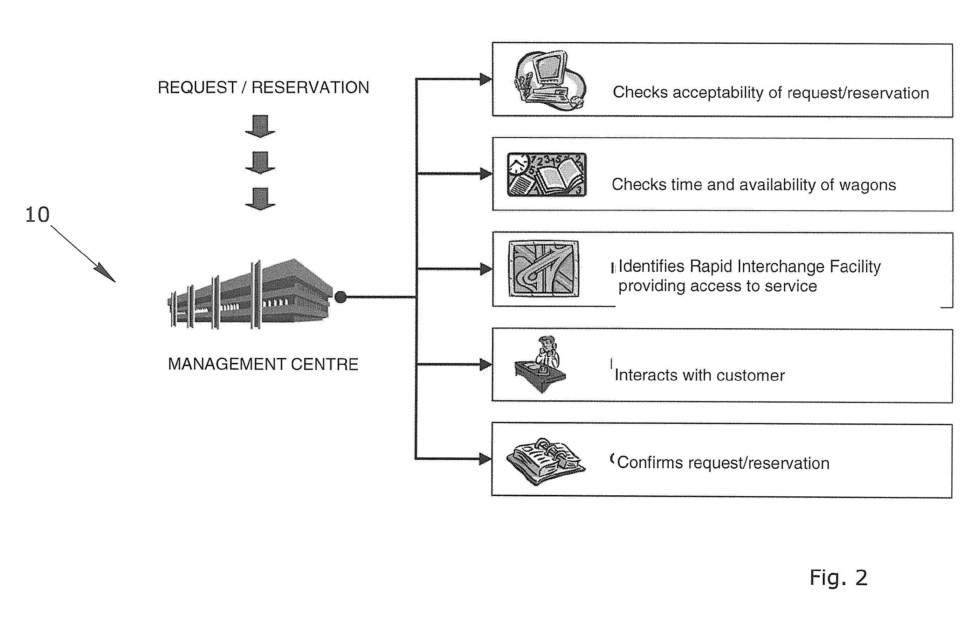

Figures 2 and 3 illustrate other aspects of the management system and it may be noticed how the management and monitoring centre can calculate the positions in space and time of both the requesting party and of the trains that can potentially meet the request.

The system checks that the train is correctly positioned in such a way that each loading bay is exactly aligned with a single rail wagon. The requesting party's vehicle is loaded at the agreed rapid interchange facility, where the system assigns to the first vehicle to arrive the first free loading bay in the train's travel direction;

Unloading is compulsory at the reserved destination unless another request is made to check whether the wagon occupied is still available and normal access formalities are completed during the journey.

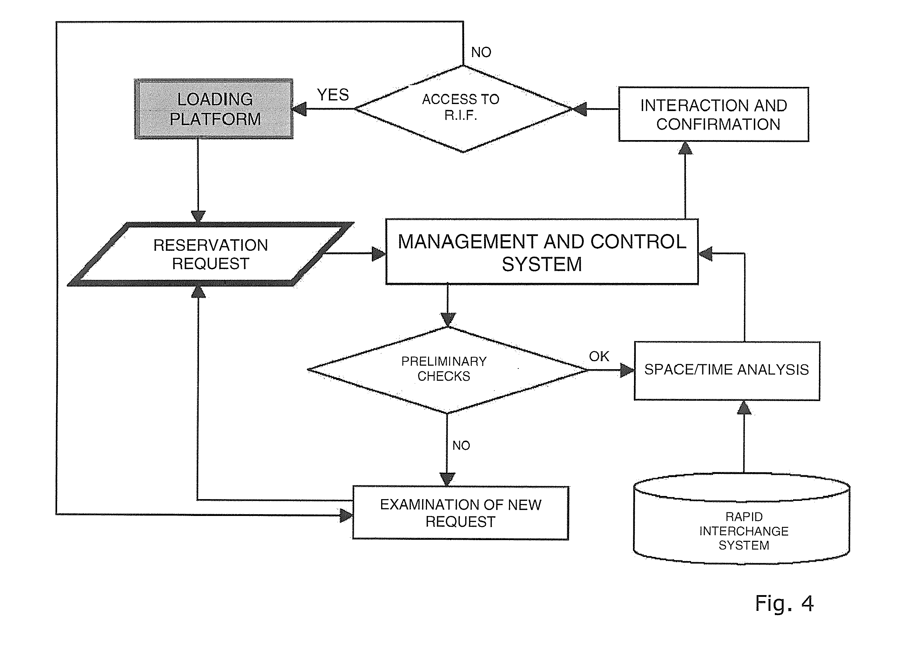

Figure 4 shows a block diagram representing the management system according to the invention.

As mentioned above, the rapid interchange and management system has several advantages. The advantages may be summed up as follows:

**1**. High flexibility: the system is designed to be expanded in modular fashion to be more densely distributed over a certain geographical area.

2. High level of accessibility: the interchange areas must be constructed close to major transport links and access to them will not require use of often congested roads.

3. Guaranteed speed: loading and unloading times will not exceed 15 minutes.

4. High capacity: the system will allow loading of all types of vehicles and the service will run on a regular interval (frequency) or timetabled basis.

5. Unlimited usability: a user wishing to access the rapid interchange system may do so simply and easily by telephone, Internet, Telepass and so on, and even during the course of a journey a driver may decide to change mode of transport and load his vehicle on a train.

6. Low cost: estimated rates are just a little higher than current motorway tolls.

Described below is a non restricting embodiment of the system according to the invention.

This embodiment provides a Motorway-Railway interchange service for heavy vehicles and goods carrying vehicles in general. Thus, the rapid interchange system according to the invention proposes a new transport entity with the aim of optimizing supply and demand in the field of mobility using modes of transport which have until now been in competition with each other.

The traffic route in this embodiment of the invention runs East-West across the central Po plain in northern Italy taking advantage of the interconnection and interchange opportunities offered by other motorway and rail routes.

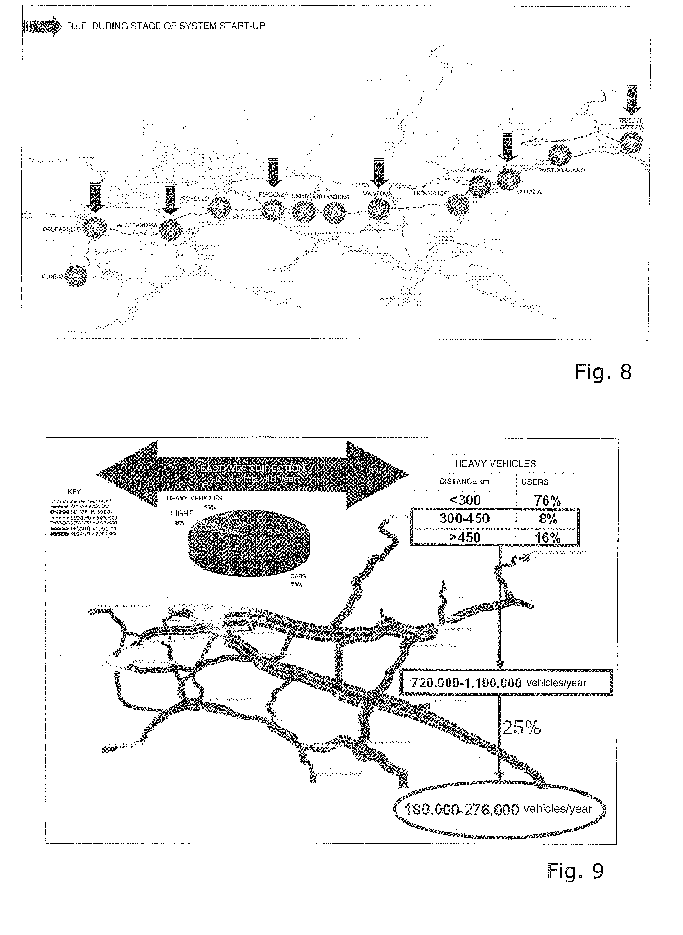

The route indicated forms part of Corridor V and is highly congested in its northernmost areas such as Turin-Venice but still has significant residual capacities along the central Po plain, as shown in Figure 8.

According to the invention, this route, approximately 700 km long, could be served, for example, by 13 rapid interchange points whose location would be determined according to the following criteria:

- Levels of demand generated and attracted
- Ease of access
- Rapid interconnectability between motorway and railway
- Geographical features of the settlement areas.

The preliminary estimate of demand is based on data from several different sources, including the Motorway Company, ANAS (Italian National Road Works Company), Associations of Transporters and ISTAT (Italian Central Statistics Institute).

The estimated s/d (supply/demand) matrix applies to motorway traffic only, with vehicles divided according to class.

Its assignment to the motorway network (qualified graph of road network) determines a flow distribution that was compared with motorway vehicle traffic data, as shown in Figure 9.

In short, the route running East-West in northern Italy is used by 3 to 4.6 million heavy vehicles a year. Of these, approximately 76% travel distances of less than 300 km and the distances travelled by the remaining 24% are as follows:

- 8% between 300 and 450 km
- 16% more than 450 km

The users potentially attracted to the rapid interchange system belong to the last two distance brackets, that is say, in figures, from 720,000 to 1,100,000 heavy vehicles a year.

Supposing the system according to the invention is used to meet a quarter of this potential demand, which is approximately 6% of the total, we have quantities varying between 180,000 and 276,000 heavy vehicles a year.

In order to dimension the service, it is assumed that the demand to be met is 250,000 heavy vehicles a year.

A 750 m long train, whose length is in any case limited by the characteristics of the network, can carry approximately 25 vehicles simultaneously.

That means 10,000 trains a year.

At a commercial speed of 100 km/h, for the assumed distance of approximately 700 km, the train requirement is a function of the frequency of the service, as shown in the table below:

| TRAIN FREQUENCY | TRAIN REQUIREMENT |
|---|---|
| 90' | 19 |
| 120' | 1 |

This is the total requirement, that is, for both directions of travel.

As regards costs and revenues, for an initial aggregated estimate of costs we have assumed a situation comprising:

- Extension of the Cuneo-Trieste railway route: approximately 700 km
- Improvements to rail and road interconnections.

Therefore, the embodiment must make provision for the following:

- Improvement and restructuring of existing (secondary) railway lines
- Rapid interchange nodes
- Acquisition of rolling stock
- Management and monitoring system
- Road links

The resulting aggregate estimate of costs is shown in the table below:

| COSTS OF EXSTENDED CONFIGURATION | | | |
|---|---|---|---|
| WORK REQUIRED | QUANTITY | UNIT COST | TOTAL COST |
| Line doubling and electrification | 92 | 3.56 | 326.5 |
| Line doubling | 173 | 3.05 | 528.9 |
| Rapid interchange nodes | 5 | 15.00 | 75.0 |
| Rolling stock | 19 | 12.00 | 230.4 |
| Management and monitoring systems | 1 | 20.00 | 20.0 |
| Road links | 50 | 3.00 | 150.0 |
| **TOTAL (mlnEuro)** | | | **1,330.7** |

Considering a rate identical to the rate of 1.32 €/km currently applied for a similar service operating between Verona and Volgl (Germany) and assuming an average distance travelled of 350 km, we have a unit revenue of 462€, giving a total revenue of 115.5 million Euro a year.

In financial terms, the investment can be amortized in just over 20 years, without counting any capital contributions which, however, considering the type of project, are certainly available under current national and European incentive schemes.

In addition, the development of an integrated rates scheme between this system and the motorway system would add considerable advantages.

The financial benefits are evident but, as already stated, one of the main aims of the system proposed by this invention is to shift a part of the heavy vehicle traffic burden from road to rail.

Reducing the volume of heavy vehicles will have important effects not only in terms of road traffic but also in terms of energy saving, environmental emissions and road safety.

There can be no doubt that energy and the environment are priority issues, today, and certainly no less important than the problem of congested traffic.

In this regard, it is worth providing an estimate, through a few simple indicators, of how the implementation of the system according to the invention can reduce the emission of pollutants.

One typical environmental indicator is that of CO emissions whose reduction can be estimated by making a few aggregate assumptions.

Emissions can be calculated using the following two formulas:

$$e = 300 \times V_{elc}^{-09} \quad [gr/vhcl \times km] \quad [1.a]$$

$$E = e \times La \times V_{ol} \quad [grCO/day] \quad [1.b]$$

where:

$V_{elc}$ = loaded travel speed
$La$ = average length of journey in km
$V_{ol}$ = average daily volume of heavy vehicles

Assuming an average journey to be 300 km long in a certain direction of travel and assuming an 8% reduction of traffic, the increase in the loaded travel speed of heavy vehicles can be calculated using the speed-flow curve (BPR) typically used to calculate travel time:

$$T = T_0 \cdot \left[ 1 + \alpha \cdot \left( \frac{V}{C} \right)^{\beta} \right]$$

where:

$T$     loaded travel time
$T$     travel time under conditions of no traffic
$V$     vehicle flow
$C$     capacity
$\alpha$     1.2
$\beta$     2

Assuming, under current conditions, an initially saturated slow lane (V/C=1), we can use the above formula to calculate the difference in loaded travel time between this situation and the project situation where V/C=0.92.

A simple calculation gives a 20% reduction in travel time and thus, an equal increase in the loaded travel speed. Using these calculated quantities in equations [1.a] and [1.b] makes it possible to estimate the reduction in emissions:

| State | Speed (km/h) | La (km) | Vol (vhcl/day) | e (gr/vhclxkm) | E (gr CO/day) | Var% |
|---|---|---|---|---|---|---|
| Current | 70 | 300 | 8000 | 6.55 | 15,720,000 | - |
| Project | 84 | 300 | 7360 | 5.56 | 12,276,480 | -28% |

The reduction of CO emissions under the hypothesized conditions is approximately 30%. To this aspect must be added a corresponding reduction in fuel consumption of the vehicles that remain on the road. Further, a lighter burden of heavy vehicles on roads speeds up road traffic in general, reducing queues and accident risks.

Obviously, all of these benefits have a positive influence on vehicle mobility as a whole.

The system according to the invention may be implemented on any route and its validity is unlimited in time. The proposed technologies and methods are in no way restrictive and in fact, improving them would increase its efficacy.

The requirements listed below, not in any order of priority, are quite viable and relatively simple to implement.

In short, these requirements are:

1. Proximity of major road networks to railway networks.
2. Development of Rapid Interchange Facilities (RIF).
3. Use of trains whose length is compatible with the characteristics of the railway line, with low-deck wagons incorporating rapid side loading/unloading technology.
4. Creation of a railway service operating on a timetabled or regular time interval (or frequency) basis.
5. The introduction of a "smart" management and monitoring system to process reservations, apply relevant regulations and control the operation of the rapid interchange system according to the invention (location tracking, state of the system, alarms, etc.).

For the foreseeable future, since the mobility of goods and people is largely a function of the socio-economic development of a country, it has been shown that mobility grows proportionally with the GNP and for this reason, it would appear difficult to make forecasts regarding the rapid interchange system separate from forecasts of economic development.

The fact remains, however, that congestion on the roads has reached critical levels and that the GNP is always on the rise in the medium and long term, even if at times its growth is very slow.

We may therefore assume that the rapid interchange system according to the invention will spread quickly because the overall cost of mobility sustained by users (in terms of time and money) is climbing steeply, as is the value that drivers now assign to the time taken to reach a destination. Under present conditions, it is estimated that the rapid interchange system according to the invention is attractive for journeys of more than 300 km. However, as technology improves and reduces system access and egress times, while road congestion continues to increase, it is easy to imagine that the system can become attractive for shorter distances, too.

For this reason, the rapid interchange facilities are preferably quite densely distributed, that is to say, less than 70 km from each other. During periods of acute congestion, the use of the system according to the invention might even be made compulsory along certain routes. Compulsory use might, for example, be very effective during periods of peak holiday traffic when vehicle queues become seemingly endless.

The invention is described above with reference to a preferred embodiment. However, obviously the invention can be modified and adapted in several ways using technically equivalent elements and without thereby departing from the scope of the inventive concept.

**Claims**

1. A system for the rapid interchange of goods and/or vehicles between road/rail networks, especially for the interchange of goods and/or vehicles between road/motorway and rail networks **characterised in that** it comprises at least one management centre (10) having a central computer designed to process requests received from a user and relating to a given type of goods and/or road vehicle intending to use the system, wherever located, whether travelling or stationary, and to associate such requests with a railway traffic management system containing information for locating trains in time and space on a certain section of the railway line; and **in that** it further comprises a set of Rapid Interchange Facilities (RIF) well distributed along said section of the railway line and where the goods and/or road vehicles can be rapidly loaded/unloaded individually onto/from a rail wagon.

2. A rapid interchange system according to claim 1, **characterised in that** the system is implemented according to the following functional scheme:

a) reservation of travel tickets from any of the possible access points (telephone, internet, dedicated equipment located at service stations, ports, motorway toll stations and so on);

b) checking of availability and confirmation of reservation;

c) arrival of the vehicle at the RIF at the agreed time;

d) performance of checks during access to the RIF;

e) rapid loading of the vehicle as is at the agreed node and time on board the train indicated;

f) use of services available during the train journey (restaurant, sleeping car, etc.);

g) rapid unloading at destination.

3. A rapid interchange system according to either of the foregoing claims, **characterised in that** it comprises a plurality of rapid interchange facilities (RIF) (11), where the interchange of the goods and/or vehicles between the road or motorway and the railway occurs.

4. A rapid interchange system according to any of the foregoing claims, **characterised in that** at least one rapid interchange facility (RIF) is located at a motorway exit, the latter having a branch leading directly to the rapid interchange facility before reaching the motorway toll station so that payment of the toll takes place only after the vehicle is unloaded at destination, or after the driver has decided to leave the motorway-railway system.

5. A rapid interchange system according to any of the foregoing claims, **characterised in that** the rapid interchange facility (RIF) has an access gate where routine checks are carried out on the vehicle and on travel documents, these checks including:

   • identification and access;
   • vehicle dimensions and clearances;
   • thermogram;
   • weight;
   • verification of reservation.

6. A rapid interchange system according to any of the foregoing claims, **characterised in that**, at the rapid interchange facilities, vehicle dimensions and clearances can be checked by a laser or image recognition system, whilst vehicle weight can be checked using a piezoelectric system or other system embedded in the road.

7. A rapid interchange system according to any of the foregoing claims, **characterised in that** the vehicle loading/ unloading technology uses low-deck railway wagons loaded/unloaded from the side, and bays with side loading/ unloading platforms.

8. A rapid interchange system according to any of the foregoing claims, **characterised in that** the loading and unloading of goods/vehicles onto and from the rail wagons takes place on bays positioned parallel with the railway line and comprising loading/unloading platforms (13, 15) which, once the train (12) is in position, move the vehicles/goods (14) sideways until each is completely loaded/unloaded onto/from the rail wagon.

9. A rapid interchange system according to any of the foregoing claims, **characterised in that**, while vehicles are being loaded at the rapid interchange facility, other vehicles, whose destination is at that rapid interchange facility, are unloaded from the train (12) by unloading platforms (15).

10. A rapid interchange system according to any of the foregoing claims, **characterised in that** the vehicle to be loaded enters the loading bay where there is a platform equipped with revolving rollers which, once the train has been suitably positioned, starts moving said rollers in such a way as to shift the vehicle sideways onto the rail wagon deck.

Fig. 1

Checks acceptability of request/reservation

Checks time and availability of wagons

Identifies Rapid Interchange Facility providing access to service

Interacts with customer

Confirms request/reservation

REQUEST / RESERVATION

MANAGEMENT CENTRE

10

Fig. 2

location

line service times

10

MANAGEMENT CENTRE

wagon availability

11

R.I.F.

Fig. 3

INTERACTION AND CONFIRMATION

ACCESS TO R.I.F.

NO

YES

LOADING PLATFORM

MANAGEMENT AND CONTROL SYSTEM

RESERVATION REQUEST

SPACE/TIME ANALYSIS

OK

PRELIMINARY CHECKS

NO

EXAMINATION OF NEW REQUEST

RAPID INTERCHANGE SYSTEM

Fig. 4

Fig. 5

R.I.F. AREA

WAITING AREA

LOADING AREA

Rates collection

Thermographic check

Shape check

Weight check

Other checks

Fig. 6

STAGE 1

STAGE 2

Fig. 7

Fig. 8

Fig. 9